# FASCICULE DE BREVET EUROPEEN

(11) **EP 1 216 129 B1**
(45) Date de publication et mention de la délivrance du brevet: **07.05.2003**
(21) Numéro de dépôt: 00966199.2
(22) Date de dépôt: 25.09.2000
(51) Int. Cl.: B29C 35/04, F27B 9/10, F27B 9/02

(54) **FOUR A GAZ DE CUISSON EN CONTINU NOTAMMENT DE PRODUITS EN CAOUTCHOUC**
GASDURCHLAUFOFEN INSBESONDERE FÜR KAUTSCHUK PRODUKTE
GAS OVEN FOR CONTINUOUS CURING IN PARTICULAR RUBBER PRODUCTS

(30) Priorité: 28.09.1999 FR 9912083
(43) Date de publication de la demande: 26.06.2002
(73) Titulaire: Etablissements Paumelle, 76210 Bolbec (FR)
(72) Inventeur: PAUMELLE, Roland, Marie-André, F-76560 Cherville (FR)
(74) Mandataire: Jacobson, Claude
(86) Numéro de dépôt international: FR0002645
(87) Numéro de publication internationale: WO01023161

(56) Documents cités:
- WO-A-90/11482
- DE-B- 1 029 023
- FR-A- 1 487 750
- GB-A- 987 525
- US-A- 4 270 898
- US-A- 5 172 848
- US-A- 5 639 418

## Description

La présente invention concerne les fours de cuisson et se rapporte plus particulièrement aux fours de cuisson de produits en caoutchouc.

On connaît des fours de cuisson électrique dont le coût de construction est modéré mais dont le prix de revient d'exploitation est élevé.

On connaît par ailleurs des fours de cuisson à gaz présentant une puissance consommée très importante et dont les inconvénients techniques sont les suivants :
- faible isolation entraînant une consommation inutile,
- évacuation des gaz de combustion dégagés par le brûleur à gaz au travers du courant de chauffe, entraînant des risques de pollution des produits à cuire,
- évacuation simultanée par tirage mécanique des vapeurs de cuisson dégagées par le produit et des gaz de combustion dégagés par la chauffe entraînant une surconsommation d'énergie. Ceci rend nécessaire d'évacuer une grande quantité d'air chaud pour extraire les gaz brûlés même si le produit ne dégage pas de vapeur de cuisson,
- veine d'air irrégulière sur la longueur du four entraînant une cuisson irrégulièrement répartie sur le produit pouvant provoquer des chocs thermiques,
- tirage mécanique dépendant simultanément ou séparément des vapeurs de cuisson et des gaz de combustion rendant difficile la réalisation de réglages et l'optimisation de la cuisson.

L'invention vise donc à remédier aux inconvénients des fours à gaz connus, en créant un four à gaz notamment pour la cuisson du caoutchouc qui tout en étant d'un prix de revient d'exploitation inférieur aux fours connus présente un rendement amélioré et des facilités de réglage des paramètres de cuisson.

L'invention a donc pour objet un four de cuisson de produits en caoutchouc comprenant des moyens de chauffage à gaz d'une zone de cuisson à travers laquelle le produit à traiter est déplacé, ledit four étant formé de modules juxtaposés intégrés dans une ligne de fabrication comprenant chacun une enceinte convenablement isolée, un échangeur thermique à brûleur à gaz et des moyens de pulsion et d'acheminement de l'air chauffé par l'échangeur thermique vers une zone de cuisson du produit, le circuit de combustion du gaz de l'échangeur thermique étant séparé du circuit d'air chaud traversant la zone de cuisson, caractérisé en ce que les moyens d'acheminement de l'air chaud, également réparti et diffusé par des grilles le long de la zone de cuisson, comprennent des trajets d'amenée de l'air chaud de deux côtés de la zone de cuisson et un trajet d'évacuation de l'air par le milieu de la zone de cuisson.

Selon d'autres caractéristiques de l'invention :
- l'échangeur thermique de chaque module de four est un échangeur en épingle chauffé par l'intérieur à l'aide d'un brûleur à gaz correspondant et les échangeurs de deux modules de fours voisins comportent des conduits d'évacuation des gaz brûlés reliés à une cheminée commune,
- les échangeurs thermiques sont symétriquement inversés au niveau des jonctions entre modules et les moyens d'alimentation en gaz et d'extraction des gaz brûlés de deux modules voisins sont regroupés,
- les moyens de propulsion et d'acheminement d'air chaud vers la zone de cuisson de chaque module comportent au moins une turbine de ventilation entraînée par un moteur électrique et disposée près du fond de l'enceinte du module en regard de trajets d'acheminement de l'air chaud délimités par des tôles de déviation de l'air chaud pour l'amener de part et d'autre de la zone de cuisson, et des grilles de répartition de l'air chaud le long de la zone de cuisson,
- ladite zone de cuisson étant formée d'un tronçon de transporteur, les grilles de répartition de l'air chaud de cuisson sont disposées sur les côtés dudit transporteur et il est prévu des prises d'air d'évacuation de l'air de cuisson, disposées au-dessous du tronçon de transporteur et traversant l'un des trajets d'amenée de l'air chaud de cuisson audit transporteur,
- l'enceinte de chaque module comporte une porte latérale d'accès de maintenance et une porte supérieure d'accès à la zone de cuisson et lesdites portes s'étendent sur toute la longueur dudit module,
- il comporte en outre un dispositif de brûlage des fumées chargées de produits imbrûlés résultant du passage de l'air de cuisson sur le produit à chauffer, ledit dispositif de brûlage étant relié à un conduit d'évacuation opposé à la porte latérale d'accès de maintenance,
- ledit dispositif de brûlage comprend un conduit vertical dans lequel débouche un brûleur à gaz et un ventilateur de réglage du débit du dispositif de brûlage, une cloche étant interposée dans le conduit vertical et formant avec celui-ci et une chambre qui l'entoure une chicane d'évacuation.

L'invention sera mieux comprise à la lecture de la description qui va suivre, donnée uniquement à titre d'exemple et faite en se référant aux dessins annexés, sur lesquels :
- la Fig.1 est un schéma de principe du four à gaz suivant l'invention;
- la Fig.2 est une vue en perspective avec arrachement partiel du four de cuisson suivant l'invention; et
- la Fig.3 est une vue en coupe suivant le plan 3-3 de la Fig.2.

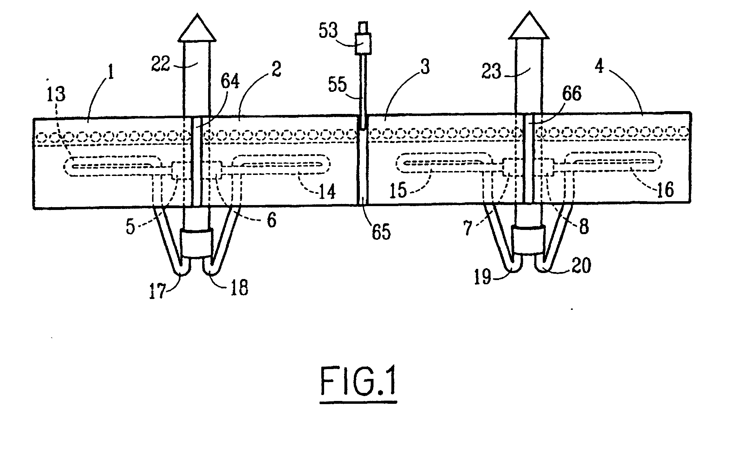

La figure 1 montre le schéma de principe du four à gaz suivant l'invention.

Le four représenté schématiquement à la figure 1 comporte plusieurs modules de four 1,2,3,4 dont le nombre est fonction de la vitesse de défilement du produit à cuire déterminée par la vitesse de la ligne de fabrication située en amont et du temps de séjour nécessaire au produit pour effectuer sa cuisson.

Les modules 1,2,3,4, sont reliés entre eux par des moyens d'assemblage de leurs enceintes avec interposition de joints d'isolation thermique appropriés 64, 65, 66.

A chaque module 1 à 4 est associé un brûleur à gaz 5,6,7,8 alimenté en gaz par une conduite d'alimentation 9,10,11,12 et chauffant par l'intérieur un échangeur thermique en acier inoxydable 13,14,15,16 formé d'un tube en épingle. Chaque brûleur produit à partir d'un mélange air-gaz, une flamme allongée à l'intérieur du tube qui véhicule ensuite les produits de combustion sans aucun contact avec l'extérieur du tube. Les produits de combustion sont aspirés par un ventilateur d'extraction en sortie du tube.

Pour simplifier la construction du four, les échangeurs thermiques sont symétriquement inversés au niveau des jonctions entre les modules, ce qui permet de regrouper les conduites d'alimentation en gaz 9 et 10 et les conduits d'extraction des gaz brûlés 17,18, 19 et 20 reliés à des cheminées d'évacuation 22,23 s'élevant au-dessus de la toiture.

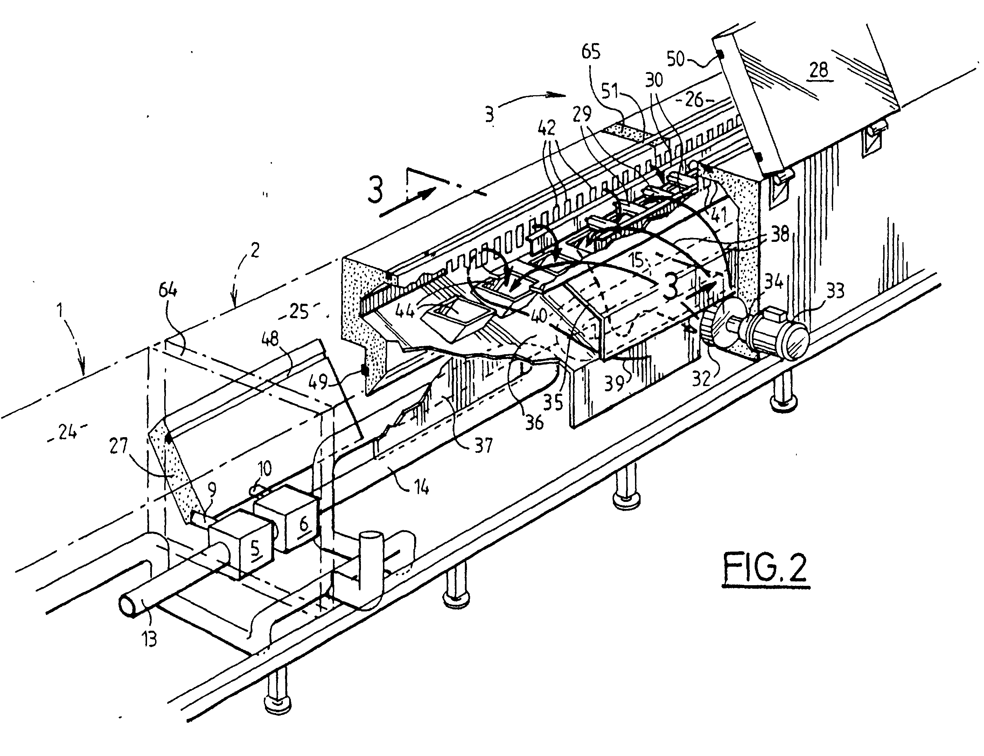

Comme indiqué plus clairement à la figure 2, chaque module comporte une enceinte 24,25,26 dans laquelle est monté l'échangeur 13,14,15 correspondant.

Chaque enceinte comprend, comme l'enceinte 25 représentée de façon plus détaillée à la figure 2, une porte latérale 27 d'accès en vue de la maintenance du four s'étendant au niveau des échangeurs 13,14,15,16 sur toute la longueur du module.

Elle comporte en outre une porte supérieure 28 d'accès à un tunnel de cuisson dans lequel est disposé un transporteur à rouleaux 29 porté par deux rails 30 et disposé au-dessus de la région de l'échangeur thermique 15.

L'ouverture des portes 28 permet un accès total sur toute la longueur du four facilitant la maintenance de la zone de cuisson (nettoyage ou remplacement d'un tapis ou de rouleaux du convoyeur) et le guidage du produit à cuire lors du lancement d'une campagne de fabrication.

Au lieu d'un transporteur à rouleaux, il est possible d'utiliser un tapis perforé ou grillagé (non représenté).

Dans la paroi de l'enceinte 25 opposée à la porte d'accès de maintenance 27, est disposée une turbine de ventilation 32 entraînée en rotation par un moteur électrique 33 muni d'une turbine de refroidissement 34 destinée à dissiper la chaleur transmise par l'arbre de transmission reliant la turbine de ventilation et le moteur électrique et ayant une extrémité à l'intérieur du four et une extrémité à l'extérieur du four.

Ainsi on évite toute élévation de température excessive du moteur électrique.

La turbine de ventilation 32, avantageusement réalisée en acier inoxydable, est disposée dans la partie basse de la paroi de l'enceinte 26 opposée à la porte 27.

Le nombre et l'emplacement des turbines de ventilation 32 peut varier selon les besoins et la conception d'ensemble du four. Il peut y en avoir une ou plusieurs par module 1, 2, 3, 4.

Grâce à l'extraction centrale des fumées par le dispositif dont on parlera plus loin et à ces turbines 32, on réalise une aspiration d'air extérieur qui pénètre dans le four par l'orifice d'entrée du produit à cuire dans le premier module 1 et par l'orifice du dernier module 4 par lequel le produit cuit sort du four, ainsi que la progression de cet air aspiré en direction de la zone centrale du four.

Entre la turbine 32 et la zone du transporteur à rouleaux sont disposées des tôles de déflexion 35,36,37, par exemple en acier inoxydable qui définissent des trajets 38,39 d'air de chauffage matérialisés par des flèches correspondantes, lesdits trajets 38,39 aboutissant de part et d'autre du transporteur à rouleaux 29 afin d'assurer un chauffage homogène du produit qu'il transporte et un trajet 40 de retour vers le fond de l'enceinte.

Les trajets d'air de chauffage 38,39 débouchent sur des grilles latérales 41,42 disposées de part et d'autre des rouleaux 29, tandis que le trajet de retour 40 est défini par une série de prises d'air 44 situées au-dessous des rouleaux 29.

Les prises d'air 44 traversent le trajet 39 et aboutissent à la base de l'enceinte entre les tôles de déflexion 36 et 37. Grâce à la progression de l'air chaud imposée par les turbines 32 , on obtient ainsi une configuration hélicoïdale du trajet de l'air à l'intérieur du four. Au fur et à mesure de sa progression, cet air se charge en gaz divers résultant de la cuisson du produit.

Le four est muni sur l'une de ses parois latérales d'un orifice 54 débouchant dans un conduit d'évacuation des gaz de cuisson qui y circulent 55. Cet orifice 54 et le conduit d'évacuation correspondant 55 sont très préférentiellement disposés en position centrale par rapport à l'ensemble du four. Si le four comporte un nombre impair de modules, l'orifice 54 et le conduit 55 sont ménagés au milieu du module central. Si le four comporte un nombre pair de modules (comme représenté sur les figures), l'orifice 54 et le conduit 55 sont (comme représenté sur la figure 1) ménagés au niveau du joint d'isolation thermique 65 assurant la liaison entre les deux modules 2, 3 les plus centraux. On peut également, au lieu de cela, prévoir deux orifices 54, ménagés chacun sur l'un des modules 2, 3, près de son extrémité la plus proche du joint séparant les modules, et de faire se rejoindre les conduites d'évacuation issues de ces orifices 54 pour former un conduit d'évacuation unique. Si on estime tolérable un léger décentrement de l'évacuation des gaz de cuisson, on peut aussi ne prévoir qu'un seul orifice 54, ménagé sur la paroi d'un des deux modules 2, 3 près de son extrémité la plus proche du milieu du four. Ces deux dernières configurations permettent d'éviter les problèmes d'étanchéité du joint thermique 65 que pourrait poser le fait d'y ménager un orifice 54 et d'y brancher un conduit 55.

Cette disposition centrale de l'évacuation des gaz permet d'assurer une bonne symétrie et une bonne homogénéité du flux d'air de cuisson à l'intérieur du four, ainsi qu'un tirage satisfaisant garantissant de bons échanges thermiques entre l'air destiné à la cuisson et les échangeurs d'une part, et entre l'air destiné à la cuisson et le produit à cuire d'autre part. La configuration hélicoïdale du trajet de l'air de cuisson procurée par les tôles de déflexion 35, 36, 37 et les prises d'air 44, et le tirage assisté par la ou les turbines 32 grâce auquel l'air de cuisson est poussé à suivre ce trajet hélicoïdal, contribuent à l'obtention de ce résultat.

On voit donc que le circuit d'amenée et d'évacuation de l'air de chauffage du produit déplacé sur le transporteur à rouleaux 29 est indépendant du circuit de combustion du gaz dans les brûleurs.

Les parois et les portes de l'enceinte 25 comme celles des autres enceintes sont réalisées en un isolant formé de fibres en céramique à couches croisées disposées entre un revêtement intérieur 31a en tôle d'acier inoxydable et un revêtement extérieur 31 b en acier peint.

Les portes telles que la porte latérale 27 et la porte supérieure 28 d'accès au tunnel de cuisson sont munies ainsi que leurs encadrements, de joints respectifs 48,49 et 50,51 en tresses de fibres réfractaires.

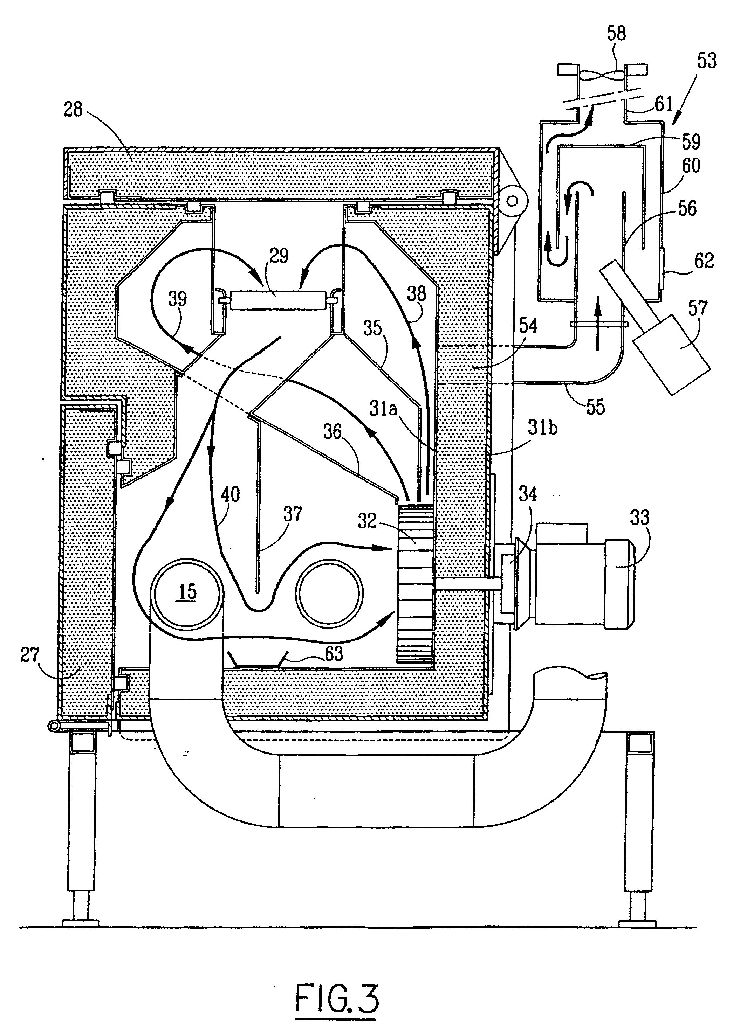

Comme représenté à la figure 3, selon la nature, la quantité et la toxicité des vapeurs de cuisson dégagées par le produit, un dispositif de brûlage 53 peut être installé en option sur le conduit d'évacuation 55. Un brûleur à gaz 57 est placé dans le conduit d'évacuation 55 et projette sa flamme dans le sens du flux. Une cloche 59 vient alors coiffer le conduit d'évacuation au-dessus du brûleur 57 formant ainsi une chambre de chauffe. Les gaz brûlés sont alors collectés autour de cette cloche 59 par une chambre 60 puis aspirés par un ventilateur d'extraction 58 au travers du conduit 61. Un hublot de visite 62 disposé dans la chambre 60 permet de visualiser l'encrassement de celle-ci par des suies ou autres. Le brûleur à gaz 57 doit être capable de porter les fumées à une température de l'ordre de 1200°C.

Selon la nature et les caractéristiques du produit à cuire, un dispositif de régulation de l'hygrométrie de l'air chaud nécessaire pour la cuisson peut être mis en place pour éviter tout dessèchement du produit à cuire ou pour modifier l'aspect en surface du produit après cuisson (brillance, aspect peau d'orange, etc...). Dès la détection d'un manque d'humidité de l'air de cuisson, une quantité d'eau réglable sera déversée dans un bac 63 posé sur le fond du four. L'évaporation de cette eau viendra alors rétablir la quantité de vapeur d'eau contenue dans l'air de cuisson à un taux d'hygrométrie réglable.

Le fonctionnement du four est le suivant.

Lorsqu'un produit à chauffer est présenté à l'entrée du four, l'opérateur ouvre les portes supérieures 28 d'accès au tunnel de cuisson et l'extrémité avant d'un produit à cuire en continu est placée dans le tunnel de cuisson. Puis, il referme les portes 28.

Le four ayant été au préalable réglé en fonction des paramètres de cuisson du produit à traiter, il est mis en marche et le produit est entraîné dans le transporteur à rouleaux 29 à la vitesse désirée compatible avec le temps de séjour du produit dans le four.

Les brûleurs à gaz 5,6,7,8 chauffent l'air entrant dans les échangeurs thermiques 13,14,15,16. Leurs flammes se propagent dans les tubes en épingle des échangeurs et les gaz brûlés sont évacués par les cheminées 22,23 (Fig.1) sans qu'il y ait contact avec l'air de chauffage du produit.

Pour chaque module 1 à 4, une turbine 32 aspire l'air chaud devant l'échangeur thermique 15 par son centre et le rejette sur toute sa périphérie. Au lieu d'une turbine 32, on peut en prévoir plusieurs. Le déflecteur 35 sépare alors le flux d'air pulsé en deux veines d'air 38 et 39 de débits identiques.

La veine d'air 38 guidée par les parois 31a et 35 traverse alors les grilles latérales 41 pour diffuser sa chaleur de façon régulière et non brutale dans la zone de cuisson sur toute la longueur coté droit du four.

De même, la veine d'air 39 guidée par les parois 35 et 36 traverse alors les grilles latérales 42 pour diffuser sa chaleur de façon régulière et non brutale dans la zone de cuisson sur toute la longueur coté gauche du four.

De nombreuses prises d'air 44 situées sous le convoyeur 29 unissent alors les veines d'air 38 et 39 en une veine d'air 40 de retour vers l'échangeur thermique 15 pour être à nouveau réchauffée.

Lorsque le four est muni d'un dispositif de brûlage de fumées, une partie du gaz mis en mouvement par les turbines est évacuée de l'enceinte du four par le conduit 55 (Fig.3), les fumées sont brûlées dans le conduit vertical 56 par le brûleur à gaz 57 et évacuées à travers la chicane formée par la cloche 59 et la chambre 60 vers la cheminée 61 avec un débit qui est fonction de la vitesse de rotation du ventilateur 58.

Le four qui vient d'être décrit présente vis à vis des fours connus, un certain nombre d'avantages.

La puissance qu'il consomme est à performances égales, inférieure à celle consommée par les fours classiques.

La construction modulaire du four permet la juxtaposition de modules et par conséquent d'obtenir des fours de longueur adaptée à l'application envisagée.

La distribution d'air est régulière et répartie de part et d'autre du produit et sur la longueur du four grâce à la présence de nombreuses turbines de propulsion de l'air de chauffage, au trajet hélicoïdal imposé à l'air de chauffage par les turbines, les déflecteurs et les prises d'air, et à l'évacuation dans une zone centrale unique de l'air de chauffage chargé en gaz résultant de la cuisson du produit.

L'agencement des échangeurs à l'intérieur du four évite toute perte de chaleur.

La séparation du circuit de combustion et du circuit de chauffe permet de ne pas contaminer le produit chauffé.

Les circuits étant indépendants, leurs réglages sont également indépendants et sont simples à réaliser.

Les vapeurs de cuisson sont évacuées par tirage mécanique, ce qui permet un renouvellement de l'air.

Possibilité de réaliser une régulation proportionnelle de la chauffe plutôt qu'une régulation tout ou rien et ceci sur chaque tronçon du four.

Possibilité de réaliser pour chaque tronçon du four, une température de cuisson différente.

Le fait de pouvoir éliminer les imbrûlés par combustion permet de limiter les dégagements d'imbrûlés et de réduire au minimum l'encrassement des cheminées.

La disposition des brûleurs permet de réchauffer l'air qui les alimente et de réduire ainsi la consommation d'énergie.

Le circuit très court entre les échangeurs thermiques et la zone de cuisson réduit les pertes de chaleur.

La présence de portes de visite sur toute la longueur du four améliore son accessibilité.

La réalisation de la partie chaude du four en acier inoxydable améliore sa tenue à la corrosion.

## Revendications

1. Four à gaz de cuisson en continu notamment de produits en caoutchouc comprenant des moyens de chauffage d'une zone de cuisson (29) à travers laquelle le produit à traiter est déplacé, ledit four étant formé de modules (1,2,3,4) juxtaposés intégrés au sein d'une ligne de fabrication et comprenant chacun une enceinte (24,25,26), convenablement isolée, un échangeur thermique (13,14,15,16) à brûleur à gaz (5,6,7,8) et des moyens (32,33,35,36, 41,42) de propulsion et d'acheminement de l'air chauffé par l'échangeur thermique vers une zone de cuisson (29) du produit, le circuit de combustion du gaz de l'échangeur thermique étant séparé du circuit d'air chaud traversant la zone de cuisson, **caractérisé en ce que** les moyens d'acheminement de l'air chaud, également réparti et diffusé par des grilles (41, 42) le long de la zone de cuisson, comprennent des trajets (38,39) d'amenée de l'air chaud de deux côtés de la zone de cuisson (29) et un trajet (40) d'évacuation de l'air par le milieu de la zone de cuisson.

2. Four de cuisson selon la revendication 1, **caractérisé en ce que** l'air destiné à traverser la zone de cuisson (29) pénètre dans le four par les orifices d'entrée et de sortie du produit, et **en ce que** l'évacuation de l'air chaud chargé en gaz résultant de la cuisson du produit est effectuée par des moyens (54, 55) situés dans la zone centrale du four.

3. Four de cuisson suivant l'une des revendications 1 et 2, **caractérisé en ce que** l'échangeur thermique (13,14,15,16) de chaque module de four est un échangeur à tube en épingle chauffé par l'intérieur à l'aide d'un brûleur à gaz correspondant (5,6,7,8) et **en ce que** les échangeurs (13,14,15,16) de deux modules de fours voisins_comportent des conduits (17,18,19,20) d'évacuation des gaz brûlés reliés à une cheminée commune (22,23).

4. Four de cuisson suivant la revendication 3, **caractérisé en ce que** les échangeurs thermiques sont symétriquement inversés au niveau des jonctions entre modules et les moyens d'alimentation en gaz et d'extraction des gaz brûlés de deux modules voisins sont regroupés.

5. Four de cuisson suivant l'une des revendications 1 à 4, **caractérisé en ce que** les moyens de propulsion et d'acheminement d'air chaud vers la zone de cuisson de chaque module comportent au moins une turbine de ventilation (32) entraînée par un moteur électrique (33) et disposée près du fond de l'enceinte du module en regard de trajets d'acheminement de l'air chaud délimités par des tôles (35,36) de déflexion de l'air chaud pour l'amener de part et d'autre de la zone de cuisson, et des grilles (41,42) de répartition de l'air chaud le long de la zone de cuisson.

6. Four de cuisson suivant la revendication 5, **caractérisé en ce que** ladite zone de cuisson de chaque module étant formée d'un tronçon de transporteur (29), les grilles (41,42) de répartition de l'air chaud de cuisson sont disposées sur les côtés dudit transporteur et **en ce qu'**il est prévu des prises d'air (44) d'évacuation de l'air de cuisson, disposées au-dessous du tronçon de transporteur et traversant l'un des trajets d'amenée de l'air chaud de cuisson audit transporteur.

7. Four de cuisson suivant l'une des revendications 1 à 6, **caractérisé en ce que** l'enceinte de chaque module comporte une porte latérale (27) d'accès de maintenance et une porte supérieure (28) d'accès à la zone de cuisson et lesdites portes s'étendent sur toute la longueur dudit module.

8. Four de cuisson suivant l'une des revendications 1 à 7, **caractérisé en ce qu'**il comporte en outre un dispositif (56,57,58,58,59,60,61) de brûlage des fumées chargées de produits imbrûlés résultant du passage de l'air de cuisson sur le produit à chauffer, ledit dispositif de brûlage étant relié à un conduit d'évacuation (55) opposé à la porte latérale (27) d'accès de maintenance.

9. Four de cuisson suivant la revendication 8, **caractérisé en ce que** ledit dispositif de brûlage comprend un conduit vertical (56,61) dans lequel débouche un brûleur à gaz (57) et un ventilateur (58) de réglage du débit du dispositif de brûlage, une cloche (59) étant interposée dans le conduit vertical (56,61) formant avec une chambre (60) qui l'entoure, une chicane d'évacuation.

## Patentansprüche

1. Gasdurchlaufofen insbesondere für die Wärmebehandlung von Kautschukprodukten, der Mittel für die Beheizung eines Wärmebehandlungsbereiches (29) aufweist, durch den das zu behandelnde Produkt geleitet wird, wobei dieser Ofen aus Seite an Seite angeordneten Modulen (1, 2, 3, 4) besteht, die in eine Fertigungsstrasse integriert sind, und die jeweils eine entsprechend isolierte Wand (24, 25, 26), einen Wärmetauscher (13, 14, 15, 16) mit einem Gasbrenner (5, 6, 7, 8) und Mittel (32, 33, 35, 36, 41, 42) für den Vortrieb und die Steuerung der durch den Wärmetauscher erwärmten Luft in die Wärmebehandlungszone (29) des Produktes enthält, wobei der Kreis für die Verbrennung der Gase des Wärmetauschers von dem Heißluftkreis, welcher die Wärmebehandlungszone durchquert, getrennt angeordnet ist,
**dadurch gekennzeichnet, dass**
die Mittel für die Steuerung der heißen Luft die außerdem mit Hilfe von Gitterrosten (41, 42) über den Bereich der Wärmebehandlungszone verteilt angeordnet sind, Strömungspfade (38, 39) für die Zufuhr von heißer Luft auf beiden Seiten der Wärmebehandlungszone (29), sowie einen Strömungspfad (40) für die Evakuierung von Luft durch den mittleren Bereich der Wärmebehandlungszone enthalten.

2. Durchlaufofen nach Anspruch 1,
**dadurch gekennzeichnet, dass**
die Luft, welche den Wärmebehandlungsbereich (29) durchqueren soll, durch Eingangs- und Ausgangsöffnungen für die Einfüllung des Produktes in den Ofen eingeleitet wird, und dadurch, dass die Evakuierung der heißen Luft, die mit den Gas beladen ist, welche durch die Wärmebehandlung des Produktes erzeugt worden ist, mit Hilfe von Mitteln (54, 55) erfolgt, die im zentralen Bereich des Ofens angeordnet sind.

3. Durchlaufofen nach einem der Ansprüche 1 oder 2,
**dadurch gekennzeichnet, dass**
der Wärmetauscher (13, 14, 15, 16) der einzelnen Module des Ofens aus einem Wärmetauscher in Form eines nadelförmigen Rohres besteht, welcher von der Innenseite mit Hilfe eines entsprechenden Gasbrenners (5, 6, 7, 8) beheizt wird, und dadurch, dass die Wärmetauscher (13, 14, 15, 16) aus zwei Modulen von benachbarten Öfen Rohre (17, 18, 19, 20) für die Evakuierung der Verbrennungsgase bestehen, die an einen gemeinsamen Kamin (22, 23) angeschlossen sind.

4. Durchlaufofen nach Anspruch 3,
**dadurch gekennzeichnet, dass**
die Wärmetauscher an den Verbindungen der Module symmetrisch gegenüberliegend angeordnet sind, und die Mittel für die Zufuhr von Gasen und den Abzug der verbrannten Gase von zwei Modulen in Gruppen zusammengefasst sind.

5. Durchlaufofen nach einem der Ansprüche 1 bis 4,
**dadurch gekennzeichnet, dass**
die Mittel für den Vortrieb und die Steuerung der heißen Luft in die Wärmebehandlungszone der Module mindestens eine Lüfterturbine (32) enthalten, die von einem Elektromotor (33) angetrieben wird und am Boden der Wand des Moduls gegenüber den Strömungspfaden für die Steuerung der heißen Luft angeordnet ist, und welche aus Ablenkblechen (35, 36) für die Ablenkung der heißen Luft an beiden Seiten des Wärmebehandlungsbereiches besteht, und dass Gitterroste (41, 42) für die Verteilung der Luft in der Längsrichtung des Wärmebehandlungsbereiches vorgesehen sind.

6. Durchlaufofen nach Anspruch 5,
**dadurch gekennzeichnet, dass**
der Wärmebehandlungsbereich der Module aus einem Transportabschnitt (29) besteht, und die Gitterroste (41, 42) für die Verteilung der heißen Luft für die Wärmebehandlung an den Seiten dieses Transportabschnittes angeordnet sind, und dadurch, dass Luftleitungen (44) für die Evakuierung der Luft der Wärmebehandlung vorgesehen sind, die über dem Transportabschnitt angeordnet sind und dass die Strömungspfade für die Zufuhr der Heißluft für die Wärmebehandlung den Transportabschnitt durchqueren.

7. Durchlaufofen nach einem der Ansprüche 1 bis 6,
**dadurch gekennzeichnet, dass**
die Wand der Module eine seitliche Zugangstür (27) für die Wartung und eine obere Tür (28) für den Zugang zu dem Wärmebehandlungsbereich enthält, und dass diese Türen über die gesamte Länge des Moduls angeordnet sind.

8. Durchlaufofen nach einem der Ansprüche 1 bis 7,
**dadurch gekennzeichnet, dass**
er außerdem eine Vorrichtung (56, 57, 58, 59, 60, 61) für die Verbrennung der mit den unverbrannten Produkten beladenen Rauchgase enthält, die durch die Passage der Behandlungsluft auf dem zu erwärmenden Produkt entstehen, wobei diese Vorrichtung für die Verbrennung an ein Entlüftungsrohr (55) angeschlossen ist, welches gegenüber der seitlichen Zugangstür (27) für die Wartung angeordnet ist.

9. Durchlaufofen nach Anspruch 8,
**dadurch gekennzeichnet, dass**
diese Vorrichtung für die Verbrennung ein vertikales Rohr (56, 61) enthält, in das ein Gasbrenner (57) und ein Ventilator (58) für die Regulierung des Durchsatzes der Verbrennungsvorrichtung münden, wobei eine Glocke (59) in dem vertikalen Rohr (56, 61) angeordnet ist, welche zusammen mit einer sie umrundenden Kammer (60) ein Prallblech für die Evakuierung bildet.

## Claims

1. Gas oven for continuous curing of particularly rubber products. comprising means for heating a curing area (29) across which the product to be treated is displaced, said oven being made up of juxtaposed modules (1, 2, 3, 4) integrated within the production line and each comprising a suitably insulated enclosure (24, 25, 26), a thermal exchanger (13, 14, 15, 16) with a gas burner (5, 6, 7, 8) and means (32, 33, 35, 36, 41, 42) for propelling and conveying air heated by the thermal exchanger towards an area (29) for curing the product, the gas combustion circuit from the thermal exchanger being separated from the circuit of hot air crossing the curing area, **characterised in that** the means for conveying the hot air, which is also separated and diffused by grids (41, 42) along the curing area, comprise passages (38, 39) for taking hot air from two sides of the curing area (29) and a passage (40) for evacuating the air through the middle of the curing area.

2. Curing oven according to claim 1, **characterised in that** the air intended to cross the curing area (29) gets into the oven via the inlet and outlet orifices of the product, and **in that** the hot air charged with gas resulting from curing of the product is evacuated by means (54, 55) situated in the central area of the oven.

3. Curing oven according to one of claims 1 and 2, **characterised in that** the thermal exchanger (13, 14, 15, 16) of each oven module is a tube exchanger, with a pin, heated internally by a corresponding gas burner (5, 6, 7, 8) and **in that** the exchangers (13, 14, 15, 16) of two adjacent oven modules comprise pipes (17, 18, 19, 20), connected to a common chimney, for evacuating burnt gases.

4. Curing oven according to claim 3, **characterised in that** the thermal exchangers are symmetrically opposite at the level of the joints between modules and the means for feeding gas and extracting burnt gases from two adjacent modules are combined.

5. Curing oven according to one of claims 1 to 4, **characterised in that** the means for propelling and conveying the hot air towards the curing area of each module comprise at least one ventilating turbine (32), driven by an electric motor (33), arranged near the base of the enclosure of the module opposite passages that convey the hot air and which are defined by metal sheets (35, 36) for deflecting the hot air and bringing it to both sides of the curing area, and grids (41, 42) for distributing the hot air along the curing area.

6. Curing oven according to claim 5, **characterised in that** said curing area of each module being made up of a conveying section (29), the gates (41, 42) distributing the hot curing air are arranged on the side of said conveyor, and **in that** this is provided with air inlets (44) for evacuating the curing air, which are arranged below the conveying section and which cross one of the passages that take the hot curing air to said conveyor.

7. Curing oven according to one of claims 1 to 6, **characterised in that** the enclosure of each module comprises a lateral gate (27) for maintenance access, and an upper gate (28) for access to the curing area, and said gates extend along the whole length of said module.

8. Curing oven according to one of claims 1 to 7, **characterised in that** it furthermore comprises a device (56, 57, 58, 58, 59, 60, 61) for burning fumes charged with combustion residue resulting from the passage of curing air over the product to be heated, said burning device being connected to an evacuation pipe (55) opposite the lateral maintenance access gate (27).

9. Curing oven according to claim 8, **characterised in that** the said device comprises a vertical pipe (56, 61), in which a gas burner emerges, and a ventilator (58) for regulating the flow from the burning device, with a bell (59), in the vertical pipe (56, 61), and its surrounding chamber forming an evacuation baffle.
